# EUROPEAN PATENT SPECIFICATION

(11) **EP 4 112 345 B1**
(45) Date of publication and mention of the grant of the patent: **22.11.2023**
(21) Application number: 22180408.1
(22) Date of filing: 22.06.2022
(51) Int. Cl.: B60J 5/04, E05F 11/54, E05F 15/40, B60W 30/09, B60W 30/095, B60Q 9/00, B60R 21/0134

(54) **DROP-OFF ASSIST DEVICE, DROP-OFF ASSIST METHOD, AND NON-TRANSITORY STORAGE MEDIUM**
ABSETZHILFEVORRICHTUNG, ABSETZHILFEVERFAHREN UND NICHTFLÜCHTIGES SPEICHERMEDIUM
DISPOSITIF D'AIDE AU DÉPÔT, PROCÉDÉ D'AIDE AU DÉPÔT, ET SUPPORT DE STOCKAGE NON TRANSITOIRE

(30) Priority: 25.06.2021 JP 2021105876
(43) Date of publication of application: 04.01.2023
(73) Proprietor: TOYOTA JIDOSHA KABUSHIKI KAISHA, Toyota-shi, Aichi-ken, 471-8571 (JP); Continental Automotive GmbH, 30165 Hannover (DE)
(72) Inventor: TOMITA, Hiroshi, TOYOTA-SHI, AICHI-KEN, 471-8571 (JP); ISHIDA, Masaho, TOYOTA-SHI, AICHI-KEN, 471-8571 (JP); TAKEUCHI, Koji, TOYOTA-SHI, AICHI-KEN, 471-8571 (JP); SOYA, Ryuichi, Yokohama-shi, KANAGAWA, 221-0031 (JP)
(74) Representative: Cabinet Beau de Loménie

(56) References cited:
- KR-A- 20140 126 928
- US-A1- 2018 251 091
- US-A1- 2020 108 770

## Description

### BACKGROUND OF THE INVENTION

### 1. Field of the Invention

The present invention relates to a drop-off assist device, a drop-off assist method, and a non-transitory storage medium.

### 2. Description of Related Art

There is a known a drop-off assist device capable of executing drop-off assist control to assist safe drop-off of an occupant of a vehicle (typically, an automobile), e.g. from US 2020/108770 A1 which discloses a drop-off assist device according to the preamble of claim 1. For example, the drop-off assist device executes the drop-off assist control when an occupant's drop-off intention (typically, an occupant's door opening operation) is detected in a case where an obstructive target that may hinder the occupant's safe drop-off (in other words, pass by the side of the vehicle) is detected while the vehicle is stopped (see Japanese Unexamined Patent Application Publication No. 2007-138457 (JP 2007-138457 A)). The vehicle including the drop-off assist device is hereinafter referred to as "host vehicle".

### SUMMARY OF THE INVENTION

The drop-off assist device detects the obstructive target as follows. The drop-off assist device includes a target information acquisition device (for example, a radar sensor) that can detect a target present in a region rearward of the host vehicle and acquire information about the target as target information. The drop-off assist device calculates, based on the target information acquired from the target information acquisition device, a predicted time required for the target to come into contact with or to come into close proximity to the host vehicle (time to collision; hereinafter referred to also as "TTC"). When the TTC is equal to or smaller than a preset time threshold TTCth, the drop-off assist device determines that the target may hinder the occupant's safe drop-off, and detects the target as the obstructive target.

The TTCth is determined based on a stopping time of the target. The stopping time is a time from a timing when a driver of the target senses danger (for example, when the driver recognizes a drop-off action of the occupant of the vehicle) to a timing when the target stops after the driver starts braking (starts to apply a brake). In other words, the stopping time is the sum of a free running time and a braking time. When the TTC of a certain target is larger than the stopping time of the target, there is a small possibility that the target will hinder the occupant's safe drop-off. Therefore, the stopping time may be a limit value of a time within which the target can avoid contact with or close proximity to the host vehicle. Thus, the stopping time is hereinafter referred to also as "avoidance limit time". By determining the TTCth based on the avoidance limit time (stopping time), unnecessary drop-off assist control is not executed when the target can avoid contact with or close proximity to the host vehicle by braking.

The avoidance limit time varies depending on the type of the target. Among typical vehicles that may be obstructive targets, such as an automobile, a motorcycle, a motorized bicycle, and a bicycle, the bicycle has the longest avoidance limit time. There is no much difference in the avoidance limit time among the other vehicles. Therefore, the TTCth is generally determined based on the avoidance limit time of the bicycle that is the maximum value.

According to this configuration, the drop-off assist control can be executed at an appropriate timing in a case where the target is a bicycle. In a case where the target is any other vehicle (that is, an automobile, a motorcycle, or a motorized bicycle), however, a value significantly larger than the avoidance limit time of this vehicle is set as the TTCth. Therefore, when the TTC of this vehicle is equal to or smaller than the TTCth though the TTC is sufficiently larger than the avoidance limit time (in other words, when the driver senses danger at this timing and starts braking, the vehicle may sufficiently avoid contact with or close proximity to the host vehicle), the vehicle is detected as the obstructive target and the drop-off assist control is executed. In the configuration in which the TTCth is determined based on the avoidance limit time of the bicycle, the drop-off assist control is executed for the vehicles other than the bicycle at a timing significantly earlier than the timing when the drop-off assist control is actually required. Therefore, a problem may arise in that unnecessary drop-off assist control is executed.

When the TTCth is set to a value larger than the avoidance limit time of a vehicle other than the bicycle, the problem of unnecessary execution of the drop-off assist control may arise for another reason. As described above, the drop-off assist device calculates the TTC of the target. This calculation process is performed only for a target that may pass by the side of the host vehicle in the future among the targets detected by the target information acquisition device. Specifically, the drop-off assist device calculates moving directions of the detected targets based on the target information. When an extension line in the moving direction of any target passes by the side of the host vehicle, the TTC of this target is calculated.

The current performance of the target information acquisition device has a limit in terms of the detection accuracy for a distant target. Therefore, the target information of the distant target is likely to include a deviation. As a result, a deviation is likely to occur in the result of calculation of the moving direction of the target. In general, vehicles other than the bicycle travel at speeds higher than that of the bicycle. Therefore, the detection of the vehicle other than the bicycle by the target information acquisition device needs to be started when the vehicle is located far behind the host vehicle. In this case, a deviation is likely to occur in the result of calculation of the moving direction of the vehicle. As a result, the extension line in the moving direction may pass by the side of the host vehicle and the TTC may be calculated even though the vehicle is not actually the target of TTC calculation (that is, there is no possibility of passing by the side of the host vehicle in the future). In such a case, there is a strong possibility that TTC ≤ TTCth easily holds when the TTCth is set to a relatively large value. Therefore, there is a strong possibility that a vehicle other than the bicycle is erroneously detected as the obstructive target. Thus, a problem may arise in that unnecessary drop-off assist control is executed.

The present invention provides a drop-off assist device capable of suppressing unnecessary execution of drop-off assist control.

A drop-off assist device according to a first aspect of the present invention includes a target information acquisition sensor configured to detect a target present in a region rearward of a host vehicle, and acquire information about the detected target as target information; and an electronic control unit configured to, while the host vehicle is stopped, calculate, based on the target information, a predicted time required for the target to come into contact with or to come into close proximity to the host vehicle, and execute drop-off assist control for assisting drop-off of an occupant of the host vehicle when the predicted time is equal to or smaller than a predetermined time threshold, set the predetermined time threshold to a predetermined first time threshold when a speed of the detected target is equal to or lower than a predetermined first speed, and set the predetermined time threshold to a value smaller than the predetermined first time threshold when the speed of the detected target is higher than the predetermined first speed.

In the present invention, when the speed of the target detected by the target information acquisition device (sensor) is equal to or lower than the first speed, the time threshold (time threshold of the predicted time to be used for determining whether the drop-off assist control needs to be executed) is set to the first time threshold. When the speed of the target is higher than the first speed, the time threshold is set to the value smaller than the first time threshold.
In general, an avoidance limit time (stopping time) of a vehicle other than a bicycle (typically, an automobile, a motorcycle, or a motorized bicycle) is shorter than an avoidance limit time of the bicycle. When the speed of a certain target is higher than a predetermined speed threshold, there is a very small possibility that the target is the bicycle. By setting the first speed to an appropriate value (for example, the above speed threshold), the time threshold in a case where the target is the vehicle other than the bicycle can be set to the value smaller than the time threshold in a case where the target is the bicycle. According to this configuration, the start timing of the drop-off assist control can be delayed to an appropriate timing when the target is the vehicle other than the bicycle, as compared with a configuration in which the time threshold is uniformly determined based on the avoidance limit time of the bicycle. As a result, it is possible to suppress both an unnecessary operation caused by a significantly early start timing of the control and an unnecessary operation caused by the performance of the target information acquisition device (sensor).

In the aspect described above, the predetermined first speed may be set based on a speed distribution of a bicycle traveling on a road; and the predetermined first time threshold may be set based on an avoidance limit time of the bicycle at a speed within a predetermined first speed range. The avoidance limit time is a limit value of a time within which the target is capable of avoiding the contact with or the close proximity to the host vehicle.

According to this configuration, the first speed and the first time threshold can be set to appropriate values. The first speed range is, for example, an average speed range when the bicycle travels on the road.

In the aspect described above, the electronic control unit may be configured to set the predetermined time threshold to a predetermined second time threshold smaller than the predetermined first time threshold when the speed of the detected target is higher than a predetermined second speed higher than the predetermined first speed.

According to this configuration, by setting the second speed and the second time threshold to appropriate values, it is possible to more reliably suppress the unnecessary execution of the drop-off assist control in the case where the target is the vehicle other than the bicycle.

In the aspect described above, the predetermined second speed may be set based on a speed distribution of the target other than a bicycle traveling on a road; and the predetermined second time threshold may be set based on an avoidance limit time of the target other than the bicycle at a speed within a predetermined second speed range. The avoidance limit time is a limit value of a time within which the target is capable of avoiding the contact with or the close proximity to the host vehicle.

According to this configuration, the second speed and the second time threshold can be set to appropriate values. The second speed range is, for example, an average speed range when the vehicle other than the bicycle travels on the road.

In the aspect described above, the electronic control unit may be configured to, when the electronic control unit determines that the occupant intends to drop off and while the host vehicle is stopped, calculate the predicted time, and execute the drop-off assist control when the predicted time is equal to or smaller than the predetermined time threshold.

In the aspect described above, the drop-off assist control may be control of the electronic control unit to generate an alert.

In the aspect described above, the drop-off assist control may be control of the electronic control unit to limit a degree of door opening.

In the aspect described above, the drop-off assist control may be control of the electronic control unit to lock a door.

In the aspect described above, the electronic control unit may be configured to execute the drop-off assist control when the predicted time is equal to or smaller than the predetermined time threshold continuously for a predetermined period.

A drop-off assist method according to a second aspect of the present invention includes detecting a target present in a region rearward of a host vehicle; acquiring information about the detected target as target information; and while the host vehicle is stopped, i) calculating, based on the target information, a predicted time required for the target to come into contact with or to come into close proximity to the host vehicle; ii) setting a predetermined time threshold to a predetermined first time threshold when a speed of the detected target is equal to or lower than a predetermined first speed; iii) setting the predetermined time threshold to a value smaller than the predetermined first time threshold when the speed of the detected target is higher than the predetermined first speed; and iv) executing drop-off assist control for assisting drop-off of an occupant of the host vehicle when the predicted time is equal to or smaller than the predetermined time threshold.

A non-transitory storage medium according to a third aspect of the present invention stores instructions that are executable by one or more processors and that cause the one or more processors to perform functions. The functions include detecting a target present in a region rearward of a host vehicle; acquiring information about the detected target as target information; and while the host vehicle is stopped, i) calculating, based on the target information, a predicted time required for the target to come into contact with or to come into close proximity to the host vehicle; ii) setting a predetermined time threshold to a predetermined first time threshold when a speed of the detected target is equal to or lower than a predetermined first speed; iii) setting the predetermined time threshold to a value smaller than the predetermined first time threshold when the speed of the detected target is higher than the predetermined first speed; and iv) executing drop-off assist control for assisting drop-off of an occupant of the host vehicle when the predicted time is equal to or smaller than the predetermined time threshold.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic configuration diagram of a drop-off assist device according to an embodiment of the present invention (present embodiment device);
FIG. 2 is a diagram showing a three-dimensional object detection range of a radar sensor in the present embodiment device, and illustrating a method for calculating a TTC of a target detected by the radar sensor;
FIG. 3 is a graph defining relationships between a speed and a stopping distance for four types of vehicle, and illustrating an avoidance limit time;
FIG. 4 is a map defining a relationship between a speed v of a target and a time threshold TTCth; and
FIG. 5 is a flowchart showing a routine to be executed by a central processing unit (CPU) of a drop-off assist electronic control unit (ECU) of the present embodiment device.

### DETAILED DESCRIPTION OF EMBODIMENTS

### Configuration

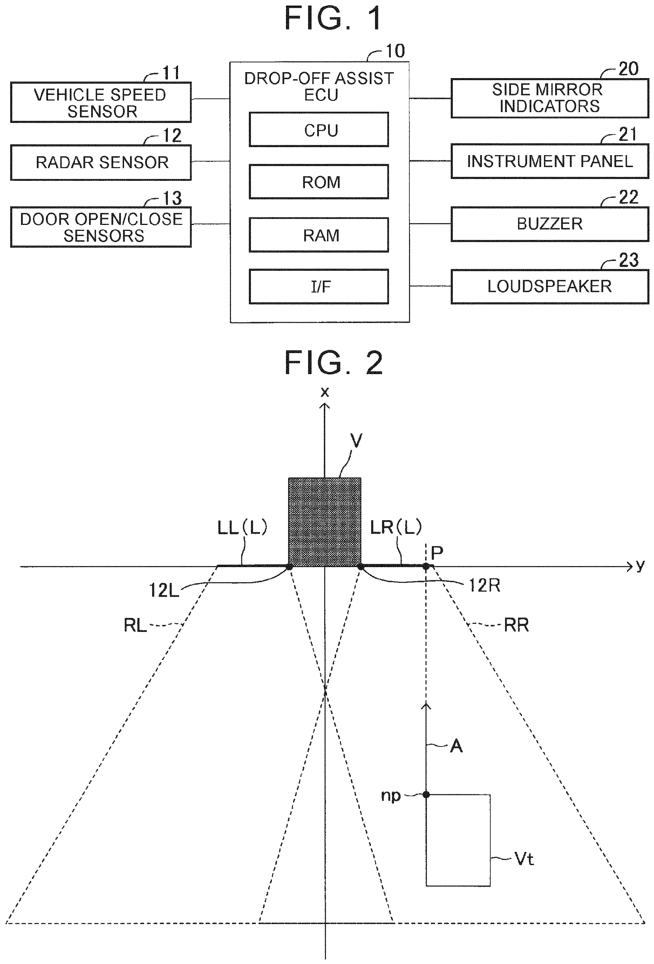

Hereinafter, a drop-off assist device according to an embodiment of the present invention (hereinafter referred to also as "present embodiment device") will be described with reference to the drawings. As shown in FIG. 1, the present embodiment device includes a drop-off assist ECU 10 and a vehicle speed sensor 11, a radar sensor 12, door open/close sensors 13, side mirror indicators 20, an instrument panel 21, a buzzer 22, and a loudspeaker 23 that are connected to the drop-off assist ECU 10. The drop-off assist ECU 10 includes a microcomputer as a main component. The ECU is an abbreviation for "electronic control unit". The microcomputer includes a CPU, a read-only memory (ROM), a random-access memory (RAM), an interface (I/F), and the like, and the CPU implements various functions by executing instructions (programs or routines) stored in the ROM. The vehicle including the present embodiment device is hereinafter referred to as "host vehicle".

The drop-off assist ECU 10 acquires signals generated or output by the sensors 11 to 13 every time a predetermined time elapses, and controls the elements (devices) 20 to 23 based on the acquired signals. The drop-off assist ECU 10 is hereinafter referred to simply as "ECU 10" as well.

The vehicle speed sensor 11 generates a signal based on a traveling speed of the host vehicle (hereinafter referred to as "vehicle speed"). The ECU 10 acquires the signal generated by the vehicle speed sensor 11 and calculates the vehicle speed based on the signal. When the vehicle speed is zero, the ECU 10 determines that the host vehicle is in a stopped state (hereinafter referred to also as "while the vehicle is stopped").

The radar sensor 12 (target information acquisition device) has a function of acquiring information about a three-dimensional object (target) present in a region rearward (a region behind the vehicle or the sides of a region behind the vehicle) of the host vehicle. The three-dimensional object is a moving object such as a vehicle or a pedestrian. The vehicle includes an automobile, a motorcycle, a motorized bicycle, and a bicycle.

As shown in FIG. 2, the radar sensor 12 includes a left radar sensor 12L provided at a left corner of a rear bumper (not shown in drawings) of a host vehicle V, and a right radar sensor 12R provided at a right corner of the rear bumper of the host vehicle V. The radar sensor 12 irradiates the surroundings of the host vehicle with radio waves in a millimeter wave band. Specifically, the left radar sensor 12L radiates the radio wave in a range including a left region RL on a left rear side of the host vehicle, and the right radar sensor 12R radiates the radio wave in a range including a right region RR on a right rear side of the host vehicle. Both the right region RR and the left region RL are shaped to be elongated outward and inward in a vehicle width direction as the distance increases rearward from the host vehicle V. In FIG. 2, the ratios of the regions RR and RL to the host vehicle V are changed for convenience.

When the three-dimensional object is within the radiation ranges of the radio waves, the radar sensor 12 receives the reflected wave from the three-dimensional object. The radar sensor 12 calculates the presence or absence of the three-dimensional object and a relative relationship between the host vehicle and the three-dimensional object (distance from the host vehicle to the three-dimensional object, direction of the three-dimensional object with respect to the host vehicle, and relative speed of the three-dimensional object to the host vehicle) based on, for example, a radiation timing and a reception timing of the radio wave. In other words, the radar sensor 12 detects the three-dimensional object present in a region rearward of the host vehicle. The three-dimensional object detected by the radar sensor 12 (that is, the three-dimensional object present in the region RR or RL) is hereinafter referred to also as "target". The radar sensor 12 outputs these pieces of information about the target to the ECU 10 as target information.

As long as the radar sensor 12 can radiate the radio wave in a range including a region corresponding to the regions RR and RL, the number of radar sensors 12 is not limited to two but may be one, three, or more. In a case of one radar sensor 12, the sensor 12 may be mounted, for example, substantially at the center of the rear bumper of the host vehicle V.
The sensor that acquires the target information is not limited to the radar sensor 12. For example, a laser radar sensor, an ultrasonic sensor, and/or a camera sensor may be used in place of or in addition to the radar sensor 12. Alternatively, a sensor to be used for blind spot monitor control may be used as the radar sensor 12. The blind spot monitor control is control for alerting a driver of the host vehicle in response to detection of a vehicle approaching the host vehicle from behind (in particular, a vehicle present in a region where the vehicle is difficult to view on a side mirror).

The description will be continued returning to FIG. 1. The door open/close sensors 13 are provided for a plurality of doors (more specifically, side doors) of the host vehicle, respectively. The door open/close sensor 13 detects an open or closed state of the door. When the door open/close sensor 13 detects that the door is in the open state, the door open/close sensor 13 generates, during a period in which the open state is detected, an open signal indicating that the door is in the open state. When the door open/close sensor 13 detects that the door is in the closed state, the door open/close sensor 13 generates, during a time in which the closed state is detected, a close signal indicating that the door is in the closed state. The ECU 10 detects which of the open signal and the close signal is generated by the door open/close sensor 13, and detects whether the door associated with the door open/close sensor 13 is in the open state or the closed state based on the detection result.

The side mirror indicators 20 are provided at predetermined positions on the right and left side mirrors of the host vehicle, and can be turned ON or OFF independently of each other. The instrument panel 21 is provided in front of a driver's seat of the host vehicle (at a position where the instrument panel 21 is visible to the driver). The buzzer 22 is built in the instrument panel 21. The loudspeaker 23 is a component of a navigation system (not shown) and is provided near a touch panel display (not shown). Details of Operation

Next, details of operation of the ECU 10 will be described. In the present embodiment, the ECU 10 executes alert control (described later) as drop-off assist control. The alert control is executed when an alert condition is satisfied. The alert condition is satisfied when Conditions 1 to 3 are all satisfied.
(Condition 1) The host vehicle is in the stopped state.
(Condition 2) An obstructive target is detected.
(Condition 3) The door of the host vehicle is in the open state.

First, Condition 1 will be described. When the vehicle speed acquired from the vehicle speed sensor 11 is zero, the ECU 10 determines that Condition 1 is satisfied.

Next, Condition 2 will be described. The obstructive target is a target that may hinder safe drop-off of the occupant of the host vehicle (in other words, pass by the side of the host vehicle), and is typically a moving object approaching the host vehicle from a region rearward of it. The ECU 10 detects the obstructive target as follows. That is, when the ECU 10 determines that a target is present in the right region RR or the left region RL based on the target information acquired from the radar sensor 12, the ECU 10 calculates a predicted time required for the target to come into contact with or to come into close proximity to the host vehicle (TTC). When the TTC is equal to or smaller than a predetermined time threshold TTCth, the ECU 10 detects the target as the obstructive target and determines that Condition 2 is satisfied.

Further details will be described with reference to FIG. 2. FIG. 2 shows a situation in which another vehicle Vt (in this example, an automobile) is approaching the host vehicle V from behind. As shown in FIG. 2, when the host vehicle V is in the stopped state (that is, Condition 1 is satisfied), the ECU 10 sets an xy coordinate system with its origin at the center between the right and left corners of the rear bumper of the host vehicle V. An x-axis extends in a front-rear direction of the host vehicle V, and a y-axis extends in the vehicle width direction (lateral direction) of the host vehicle V. That is, the y-axis may be an axis that passes through the right and left corners of the rear bumper.

The ECU 10 sets an intersection determination line L on the host vehicle V when the host vehicle V is in the stopped state. The intersection determination line L is an imaginary line set for calculating the TTC, and includes a right intersection determination line LR and a left intersection determination line LL. The left intersection determination line LL extends on the y-axis in a negative y-axis direction (outward in the vehicle width direction) from the left corner of the rear bumper, and the right intersection determination line LR extends on the y-axis in a positive y-axis direction (outward in the vehicle width direction) from the right corner of the rear bumper. The lengths of the right and left intersection determination lines LR and LL are the same (for example, about 1.3 [m]). In the present embodiment, the lengths of the right and left intersection determination lines LR and LL are substantially equal to the lengths of the regions RR and RL in the y-axis direction from the right and left corners of the rear bumper. The lengths of the right and left intersection determination lines LR and LL are preset through experiment or simulation so that "when the target passes through any position on the determination line LR or LL while the occupant of the host vehicle V is dropping off, the target may come into contact with the door or the occupant of the host vehicle V".

When the host vehicle V is in the stopped state, the ECU 10 calculates a speed vector A of the target (in the example of FIG. 2, the other vehicle Vt) based on the target information, and sets starting point of the speed vector A to a near portion np of the target. The near portion np is a portion of the front end of the target that is closest to the host vehicle V in the y-axis direction. The speed vector A can be derived by, for example, differentiating the position (distance and direction) of the target with respect to a time. That is, the speed vector A represents a moving direction of the target at a current time.

When an extension line of the speed vector A of the target intersects the right or left intersection determination line LR or LL (in other words, an intersection P of the extension line and the y-axis is on the intersection determination line L), the ECU 10 calculates, as the TTC, a "predicted time required for the target to intersect the intersection determination line L (in other words, a predicted time required for the target to reach the intersection P of the extension line of the speed vector A of the target and the intersection determination line L)"). The TTC is calculated by using the target information, and can be calculated, for example, by dividing a "distance from the near portion np to the intersection P" by a "current speed of the target".

When the TTC in a case where the target will intersect the left intersection determination line LL in the future is equal to or smaller than the TTCth, the ECU 10 determines that the target may hinder the occupant from safely dropping off from the left door, and detects the target as an obstructive target for the left door.
When the TTC in a case where the target will intersect the right intersection determination line LR in the future is equal to or smaller than the TTCth, the ECU 10 determines that the target may hinder the occupant from safely dropping off from the right door, and detects the target as an obstructive target for the right door.
In these cases, the ECU 10 determines that Condition 2 is satisfied.

When the target will intersect the right or left intersection determination line LR or LL in the future but the TTC is larger than the TTCth, the ECU 10 determines that the target (currently) has no possibility of hindering the occupant's safe drop-off, and does not detect the target as the obstructive target.
When the extension line of the speed vector A of the target will intersect neither of the right and left intersection determination lines LR and LL (in other words, the intersection P of the extension line and the y-axis is not on the intersection determination line L), the TTC is not calculated. Therefore, the ECU 10 does not detect the target as the obstructive target.
In these cases, the ECU 10 determines that Condition 2 is not satisfied.

In the example of FIG. 2, the intersection P is on the right intersection determination line LR (that is, the other vehicle Vt will intersect the right intersection determination line LR in the future). Therefore, the ECU 10 calculates the TTC for the other vehicle Vt. The ECU 10 detects the other vehicle Vt as the obstructive target for the right door when the TTC is equal to or smaller than the TTCth, and does not detect the other vehicle Vt as the obstructive target when the TTC is larger than the TTCth.

Next, Condition 3 will be described. When the ECU 10 determines that the door on a side where the obstructive target is detected is in the open state based on the signal acquired from the door open/close sensor 13, the ECU 10 determines that Condition 3 is satisfied (in other words, the occupant has a drop-off intention).

Next, the alert control will be described. When the alert condition is satisfied, the ECU 10 performs Processes 1 to 4 as the alert control.
(Process 1) A process of turning ON the side mirror indicator 20 on the side where the obstructive target is detected.
(Process 2) A process of displaying a predetermined mark (for example, a mark indicating the right rear side or the left rear side from which the obstructive target is approaching) on the instrument panel 21.
(Process 3) A process of sounding the buzzer 22.
(Process 4) A process of causing the loudspeaker 23 to issue a predetermined message (for example, a message "Please be careful of an approaching vehicle.").
The process to be executed as the alert control is not limited to the above processes. For example, at least one of Processes 1 to 4 may be executed.

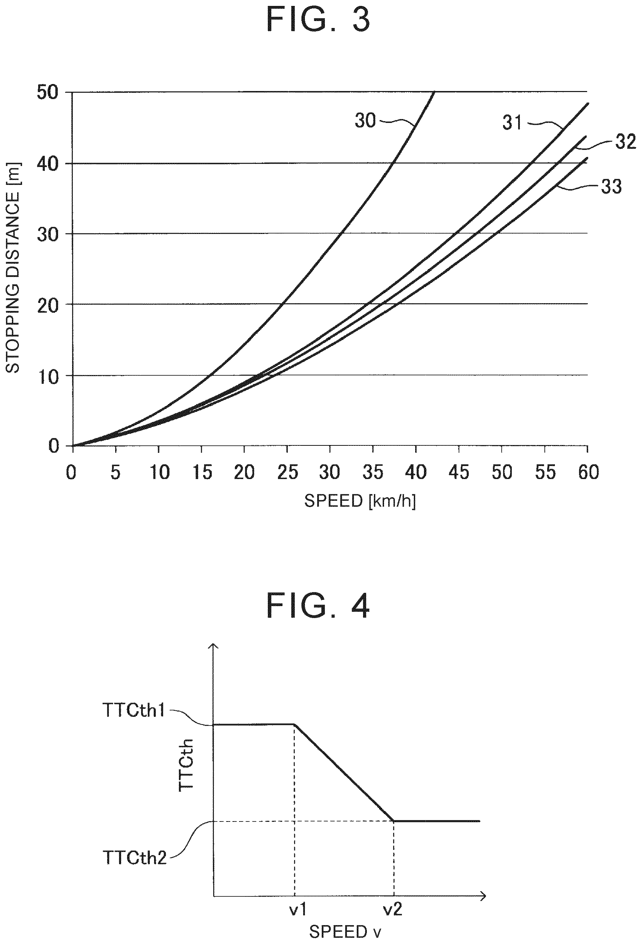

In general, one type of constant is used for the TTCth. This constant can be determined based on an avoidance limit time (stopping time) of the target. According to this determination method, however, unnecessary alert control may be executed for a specific type of target. Details will be described with reference to FIG. 3. FIG. 3 is a graph defining relationships between a speed and a stopping distance for four typical types of target (automobile, motorcycle, motorized bicycle, and bicycle) that may be obstructive targets. FIG. 3 is based on data from the Institute for Traffic Accident Research and Data Analysis. Continuous lines 30 to 33 represent behaviors of the bicycle, the motorized bicycle, the motorcycle, and the automobile, respectively. The stopping distance is a distance traveled by the target during a time from a timing when a driver of the target senses danger (for example, when the driver recognizes a drop-off action of the occupant of the vehicle) to a timing when the target stops after the driver starts braking. In other words, the stopping distance is the sum of a free running distance and a braking distance.

The slope of a tangent to the continuous line at any speed (that is, a speed derivative of the stopping distance) represents an avoidance limit time of the target associated with the continuous line. According to the graph of FIG. 3, an avoidance limit time when the bicycle is traveling at an average speed (for example, 10 to 20 [km/h]) is longer than an avoidance limit time of a vehicle other than the bicycle at any speed. In other words, a stopping distance when the bicycle is traveling at the average speed is longer than a stopping distance of the vehicle other than the bicycle at any speed. Therefore, the TTCth is generally determined based on the avoidance limit time of the bicycle (that is, the avoidance limit time having the largest value).

According to this determination method, however, the drop-off assist control for the vehicle other than the bicycle is started at a significantly early timing. Therefore, a problem may arise in that unnecessary drop-off assist control is executed. Due to the current performance of the radar sensor 12 (limit in terms of the detection accuracy for a distant target), a deviation is likely to occur in a result of calculation of a moving direction of the target (that is, the vehicle other than the bicycle) located in a distant region rearward of the host vehicle. As a result, a problem may arise in that a target that does not actually correspond to the obstructive target is erroneously detected as the obstructive target and unnecessary drop-off assist control is executed.

To suppress the unnecessary execution of the drop-off assist control described above, a TTCth having a value smaller than the "TTCth determined based on the avoidance limit time of the bicycle" may be set for the vehicle other than the bicycle. In the present embodiment, however, the radar sensor 12 cannot discriminate the type of the target. It is known that the speed distribution of bicycles traveling on roads is 1% for 5 [km/h] or lower, 54% for 15 [km/h] or lower, 42% for 25 [km/h] or lower, and 3% for over 25 [km/h]. That is, the bicycles traveling at the speeds of 25 [km/h] or lower are in the majority accounting for 97%, and there are few bicycles traveling at the speeds over 25 [km/h]. This means that, when the speed of a certain target is over 25 [km/h], there is a very small possibility that the target is a bicycle (in other words, there is a very strong possibility that the target is a vehicle other than a bicycle).

From the above, the ECU 10 of the present embodiment can change the TTCth depending on the speed of the target. Details will be described with reference to FIG. 4. FIG. 4 is a map defining a relationship between a speed v of the target and the TTCth. The map is prestored in the ROM of the ECU 10. As shown in FIG. 4, the TTCth is maintained to be a first time threshold TTCth 1 when the speed v of the target is equal to or lower than a first speed v1 (v ≤ v1). The TTCth is maintained to be a second time threshold TTCth2 (< TTCth 1) when the speed v of the target is higher than a second speed v2 (> v1) (v2 < v). The TTCth linearly decreases from TTCth1 to TTCth2 when the speed v of the target is higher than the first speed v1 and equal to or lower than the second speed v2 (v1 < v ≤ v2). When the ECU 10 calculates the speed of the target, the ECU 10 reads a value corresponding to the speed of the target by referring to the map shown in FIG. 4, and sets the value as the TTCth. The ECU 10 calculates the speed of the target based on a vehicle speed acquired from the vehicle speed sensor 11 and a relative speed of the target included in the target information.

The first speed v1 is set to "such a value that a possibility that the target is a bicycle is very low when the target is traveling at a speed satisfying v1 < v". In other words, the first speed v1 is set to a "value indicating a very small ratio of bicycles traveling on roads at speeds higher than v1". In the present embodiment, the first speed v1 is set to a value indicating that the ratio of bicycles traveling on roads at speeds higher than v1 is 3%. That is, the first speed v1 is set to 25 [km/h]. The TTCth1 is set based on the avoidance limit time when the bicycle is traveling at the average speed (for example, 10 to 20 [km/h]) (that is, the slope of a tangent to the continuous line 30 at the average speed of the bicycle in FIG. 3). The average speed of the bicycle corresponds to an example of a "first speed range". The first speed range may be a range of a speed at which the bicycle is high likely to traveling. The TTCth1 may be set based on an avoidance limit time in another speed range of the bicycle.

The TTCth2 is set based on an avoidance limit time when vehicles other than the bicycle are traveling at an average speed (for example, 30 to 60 [km/h]) (that is, the slopes of tangents to the continuous lines 31 to 33 at the average speed of the vehicles other than the bicycle in FIG. 3). The average speed of the vehicles other than the bicycle corresponds to an example of a "second speed range". The second speed range may be a range of a speed at which the vehicles other than the bicycle are high likely to traveling. The second speed v2 is introduced to suppress instability of the operation of the drop-off assist control due to an abrupt change in the TTCth. That is, in a configuration in which the TTCth is set to TTCth1 when v ≤ v1 holds and the TTCth is set to TTCth2 when v1 < v holds, the TTCth abruptly changes because v changes around v1 and the drop-off assist control is repeatedly stopped and executed, that is, the operation of the drop-off assist control is instable. Therefore, the second speed v2 is introduced and the TTCth gradually changes (gradually decreases) when v1 < v ≤ v2 holds. Thus, the second speed v2 can be set to any value larger than the first speed v1. For example, the second speed v2 can be set to any value selected from the average speed of the vehicles other than the bicycle (for example, 30 to 60 [km/h]).

According to the map of FIG. 4, the ECU 10 sets the TTCth when the speed v of the target is higher than the first speed v1 to a value smaller than the TTCth when the speed v of the target is equal to or lower than the first speed v1 (= TTCth1). Particularly when the speed v of the target is higher than the second speed v2, the TTCth is set to TTCth2. When v1 < v holds, there is a very strong possibility that the target is a vehicle other than the bicycle. Therefore, the ECU 10 of the present embodiment changes the TTCth depending on the speed of the target. It can be said that the TTCth is substantially changed depending on the type of the target ("bicycle" or "vehicle other than bicycle"). According to this configuration, the TTCth is changed to a smaller value when there is a very strong possibility that the target is a vehicle other than the bicycle than when there is no such possibility. As compared with a configuration in which the TTCth is uniformly determined based on the avoidance limit time of the bicycle regardless of the type of the target, the start timing of the drop-off assist control can be delayed to an appropriate timing when the target is the vehicle other than the bicycle. As a result, it is possible to suppress both the unnecessary operation caused by the significantly early start timing of the control and the unnecessary operation caused by the performance of the radar sensor 12.

### Specific Operation

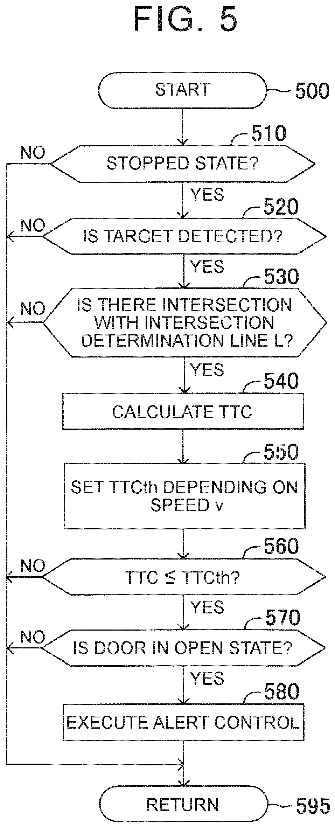

Next, a specific operation of the ECU 10 will be described. The CPU of the ECU 10 repeats a routine shown in a flowchart of FIG. 5 every time a predetermined period elapses during a period in which electric power is supplied to the ECU 10 (described later).

At a predetermined timing, the CPU starts the process from Step 500 in FIG. 5 and proceeds to Step 510 to determine whether the host vehicle is in the stopped state based on the vehicle speed acquired from the vehicle speed sensor 11 (Condition 1). When the host vehicle is in a traveling state, the CPU determines "No" in Step 510 (that is, determines that Condition 1 is not satisfied (the alert condition is not satisfied)), and proceeds to Step 595 to temporarily terminate this routine. When the host vehicle is in the stopped state, the CPU determines "Yes" in Step 510 (that is, determines that Condition 1 is satisfied), and proceeds to Step 520.

In Step 520, the CPU determines whether a target is detected based on the target information acquired from the radar sensor 12. When the target is not detected, the CPU determines "No" in Step 520 and proceeds to Step 595 to temporarily terminate this routine. When the target is detected, the CPU determines "Yes" in Step 520 and proceeds to Step 530.

In Step 530, the CPU calculates the speed vector A of the detected target based on the target information, and determines whether the extension line of the speed vector A intersects the right or left intersection determination line LR or LL. When there is no intersection, the CPU determines "No" in Step 530 and proceeds to Step 595 to temporarily terminate this routine. When there is intersection, the CPU determines "Yes" in Step 530 and proceeds to Step 540.

In Step 540, the CPU calculates the TTC for the detected target and proceeds to Step 550.
In Step 550, the CPU calculates the speed v of the detected target, reads a value corresponding to the speed v by referring to the map shown in FIG. 4, and sets the value as the TTCth. That is, the CPU sets the TTCth depending on the speed v of the target. Then, the CPU proceeds to Step 560.

In Step 560, the CPU determines whether TTC ≤ TTCth holds for the detected target (Condition 2). When TTC > TTCth holds, the CPU determines "No" in Step 560 (that is, determines that Condition 2 is not satisfied (the alert condition is not satisfied)), and proceeds to Step 595 to temporarily terminate this routine. When TTC ≤ TTCth holds, the CPU determines "Yes" in Step 560 (that is, determines that Condition 2 is satisfied (the target is the obstructive target)), and proceeds to Step 570.

In Step 570, the CPU determines whether the door (door on a side where the obstructive target is detected) is in the open state based on a signal acquired from the door open/close sensor 13. When the door is in the closed state, the CPU determines "No" in Step 570 (that is, determines that Condition 3 is not satisfied (the alert condition is not satisfied)), and proceeds to Step 595 to temporarily terminate this routine. When the door is in the open state, the CPU determines "Yes" in Step 570 (that is, determines that Condition 3 is satisfied (the alert condition is satisfied)), and proceeds to Step 580 to execute the alert control (Processes 1 to 4). Then, the CPU proceeds to Step 595 to temporarily terminate this routine.

The power supply to the ECU 10 is continued until a predetermined condition is satisfied even after an ignition switch is turned OFF. For example, this condition may be satisfied when the doors are locked or when a predetermined stop period has elapsed after the host vehicle is stopped. According to this configuration, it is possible to reduce the possibility that the alert control is not executed in a situation in which the alert control is required, thereby executing the alert control more appropriately.

Although the drop-off assist device according to the present embodiment has been described above, the present invention is not limited to the embodiment described above, and various modifications may be made without departing from the object of the present invention.

For example, the map defining the relationship between the speed v of the target and the TTCth is not limited to the map in the structure shown in FIG. 4. As long as the map is structured such that, when the speed v of the target is higher than the first speed v1, the TTCth is set to a smaller value as compared with the case where the speed v of the target is equal to or lower than the first speed v1, the threshold such as the second speed v2 need not be set.

In the embodiment described above, the alert control is executed as the drop-off assist control, but the type of the drop-off assist control is not limited to the alert control. For example, door opening limitation control of the drop-off assist device to limit the degree of door opening or door lock control of the drop-off assist device to lock the door may be executed as the drop-off assist control. Alternatively, the door opening limitation control or the door lock control may be executed as the drop-off assist control in addition to the alert control.

In the embodiment described above, Condition 2 is satisfied when TTC ≤ TTCth holds for the target, but the requirement for satisfaction of Condition 2 is not limited to this requirement. For example, Condition 2 may be satisfied when the state where TTC of the target is equal to or smaller than TTCth continues for a predetermined duration. Condition 3 may be satisfied when the door on the side where the obstructive target is detected is changed from the closed state to the open state. Alternatively, Condition 3 may be satisfied when an occupant's action for operating a door operation unit (typically, an inner lever of the door) is detected based on image data obtained by a camera mounted on the vehicle (camera capable of imaging the occupant in the vehicle).

In the embodiment described above, the alert condition is satisfied when Conditions 1 to 3 are all satisfied, but the requirement for satisfaction of the alert condition is not limited to this requirement. For example, the alert condition need not include Condition 3, and may be satisfied when Conditions 1 and 2 are satisfied. In other words, the alert control may be executed regardless of whether the occupant has a drop-off intention.

Alternatively, the alert control may be executed in two stages. Specifically, the alert control includes two types of control, that is, normal alert control and minor alert control (control at a lower assist level than that of the normal alert control). The minor alert control is, for example, control for executing Process 1. The normal alert control is, for example, control for executing at least one of Processes 2 to 4 in addition to Process 1. The minor alert control is executed when Conditions 1 and 2 are satisfied (that is, when the obstructive target is detected while the vehicle is stopped but the door is in the closed state). The normal alert control is executed when Condition 3 is further satisfied in addition to Conditions 1 and 2 (that is, when the obstructive target is detected while the vehicle is stopped and the door is in the open state).
When the door is in the closed state, the drop-off assist device cannot determine whether the occupant is attempting to drop off from the door. In other words, there may be both a possibility that the occupant has a drop-off intention but the door is not open at the current time, and a possibility that the occupant does not have the drop-off intention and the door remains in the closed state. Therefore, when the door is in the closed state, the drop-off assist device executes the minor alert control to "notify in advance the occupant having the drop-off intention about the presence of the obstructive target" and "prevent the occupant having no drop-off intention from suffering discomfort caused by executing the normal alert control".
When Conditions 1 to 3 are all satisfied, the door opening limitation control or the door lock control may be executed as the drop-off assist control in place of the normal alert control. Alternatively, the door opening limitation control or the door lock control may be executed as the drop-off assist control in addition to the normal alert control.

## Claims

1. A drop-off assist device comprising:
a target information acquisition sensor (12) configured to
detect a target (Vt) present in a region rearward of a host vehicle (V), and
acquire information about the detected target (Vt) as target information; and
an electronic control unit (10) configured to,
while the host vehicle (V) is stopped,
calculate, based on the target information, a predicted time required for the target (Vt) to come into contact with or to come into close proximity to the host vehicle (V), and
execute drop-off assist control for assisting drop-off of an occupant of the host vehicle (V) when the predicted time is equal to or smaller than a predetermined time threshold,
**characterized in that** the electronic control unit (10) is further configured to
set the predetermined time threshold to a predetermined first time threshold when a speed of the detected target (Vt) is equal to or lower than a predetermined first speed, and
set the predetermined time threshold to a value smaller than the predetermined first time threshold when the speed of the detected target (Vt) is higher than the predetermined first speed.

2. The drop-off assist device according to claim 1, wherein:
the predetermined first speed is set based on a speed distribution of a bicycle traveling on a road; and
the predetermined first time threshold is set based on an avoidance limit time of the bicycle at a speed within a predetermined first speed range, the avoidance limit time being a limit value of a time within which the target (Vt) is capable of avoiding the contact with or the close proximity to the host vehicle (V).

3. The drop-off assist device according to claim 1 or 2, wherein the electronic control unit (10) is configured to set the predetermined time threshold to a predetermined second time threshold smaller than the predetermined first time threshold when the speed of the detected target (Vt) is higher than a predetermined second speed higher than the predetermined first speed.

4. The drop-off assist device according to claim 3, wherein:
the predetermined second speed is set based on a speed distribution of the target (Vt) other than a bicycle traveling on a road; and
the predetermined second time threshold is set based on an avoidance limit time of the target (Vt) other than the bicycle at a speed within a predetermined second speed range, the avoidance limit time being a limit value of a time within which the target (Vt) is capable of avoiding the contact with or the close proximity to the host vehicle (V).

5. The drop-off assist device according to any of claims 1 to 4, wherein the electronic control unit (10) is configured to, when the electronic control unit determines that the occupant intends to drop off and while the host vehicle (V) is stopped,
calculate the predicted time, and
execute the drop-off assist control when the predicted time is equal to or smaller than the predetermined time threshold.

6. The drop-off assist device according to any of claims 1 to 5, wherein the drop-off assist control is control of the electronic control unit (10) to generate an alert.

7. The drop-off assist device according to any of claims 1 to 5, wherein the drop-off assist control is control of the electronic control unit (10) to limit a degree of door opening.

8. The drop-off assist device according to any of claims 1 to 5, wherein the drop-off assist control is control of the electronic control unit (10) to lock a door.

9. The drop-off assist device according to any of claims 1 to 8, wherein the electronic control unit (10) is configured to execute the drop-off assist control when the predicted time is equal to or smaller than the predetermined time threshold continuously for a predetermined period.

10. A drop-off assist method comprising:
detecting a target (Vt) present in a region rearward of a host vehicle (V);
acquiring information about the detected target (Vt) as target information; and
while the host vehicle (V) is stopped,
i) calculating, based on the target information, a predicted time required for the target (Vt) to come into contact with or to come into close proximity to the host vehicle (V);
ii) setting a predetermined time threshold to a predetermined first time threshold when a speed of the detected target (Vt) is equal to or lower than a predetermined first speed;
iii) setting the predetermined time threshold to a value smaller than the predetermined first time threshold when the speed of the detected target (Vt) is higher than the predetermined first speed; and
iv) executing drop-off assist control for assisting drop-off of an occupant of the host vehicle (V) when the predicted time is equal to or smaller than the predetermined time threshold.

11. A non-transitory storage medium storing instructions that are executable by one or more processors and that cause the one or more processors to perform functions comprising:
detecting a target (Vt) present in a region rearward of a host vehicle (V);
acquiring information about the detected target (Vt) as target information; and
while the host vehicle (V) is stopped,
i) calculating, based on the target information, a predicted time required for the target (Vt) to come into contact with or to come into close proximity to the host vehicle (V);
ii) setting a predetermined time threshold to a predetermined first time threshold when a speed of the detected target (Vt) is equal to or lower than a predetermined first speed;
iii) setting the predetermined time threshold to a value smaller than the predetermined first time threshold when the speed of the detected target (Vt) is higher than the predetermined first speed; and
iv) executing drop-off assist control for assisting drop-off of an occupant of the host vehicle (V) when the predicted time is equal to or smaller than the predetermined time threshold.

## Patentansprüche

1. Absetzhilfevorrichtung, umfassend:
einen Zielinformationserfassungssensor (12), der ausgestaltet ist zum
Erkennen eines Ziels (Vt), das in einem Bereich hinter einem Host-Fahrzeug (V) vorhanden ist, und
Erfassen von Informationen über das erkannte Ziel (Vt) als Zielinformationen, und
eine elektronische Steuereinheit (10), die ausgestaltet ist zum,
während das Host-Fahrzeug (V) stillsteht,
Berechnen, auf Grundlage der Zielinformationen, einer vorhergesagten Zeit, die erforderlich ist, damit das Ziel (Vt) in Kontakt mit dem Host-Fahrzeug (V) kommt oder in dessen unmittelbare Nähe gelangt, und
Ausführen einer Absetzhilfesteuerung zum Helfen beim Absetzen eines Insassen des Host-Fahrzeugs (V), wenn die vorhergesagte Zeit gleich oder kleiner als ein vorbestimmter Zeitschwellenwert ist,
**dadurch gekennzeichnet, dass** die elektronische Steuereinheit (10) ferner ausgestaltet ist zum
Festlegen des vorbestimmten Zeitschwellenwerts auf einen vorbestimmten ersten Zeitschwellenwert, wenn eine Geschwindigkeit des erkannten Ziels (Vt) gleich oder niedriger als eine vorbestimmte erste Geschwindigkeit ist, und
Festlegen des vorbestimmten Zeitschwellenwerts auf einen Wert, der kleiner als der vorbestimmte erste Zeitschwellenwert ist, wenn die Geschwindigkeit des erkannten Ziels (Vt) höher als die vorbestimmte erste Geschwindigkeit ist.

2. Absetzhilfevorrichtung nach Anspruch 1, wobei:
die vorbestimmte erste Geschwindigkeit auf Grundlage einer Geschwindigkeitsverteilung eines auf einer Straße fahrenden Fahrrads festgelegt wird, und
der vorbestimmte erste Zeitschwellenwert auf Grundlage einer Ausweichgrenzzeit des Fahrrads bei einer Geschwindigkeit innerhalb eines vorbestimmten ersten Geschwindigkeitsbereichs festgelegt wird, wobei die Ausweichgrenzzeit ein Grenzwert einer Zeit ist, innerhalb derer das Ziel (Vt) imstande ist, dem Kontakt mit dem Host-Fahrzeug (V) oder dessen unmittelbarer Nähe auszuweichen.

3. Absetzhilfevorrichtung nach Anspruch 1 oder 2, wobei die elektronische Steuereinheit (10) dazu ausgestaltet ist, den vorbestimmten Zeitschwellenwert auf einen vorbestimmten zweiten Zeitschwellenwert festzulegen, der kleiner als der vorbestimmte erste Zeitschwellenwert ist, wenn die Geschwindigkeit des erkannten Ziels (Vt) höher als eine vorbestimmte zweite Geschwindigkeit ist, die höher als die vorbestimmte erste Geschwindigkeit ist.

4. Absetzhilfevorrichtung nach Anspruch 3, wobei:
die vorbestimmte zweite Geschwindigkeit auf Grundlage einer Geschwindigkeitsverteilung des Ziels (Vt) festgelegt wird, bei dem es sich nicht um ein auf einer Straße fahrendes Fahrrad handelt, und
der vorbestimmte zweite Zeitschwellenwert auf Grundlage einer Ausweichgrenzzeit des Ziels (Vt), bei dem es sich nicht um das Fahrrad handelt, bei einer Geschwindigkeit innerhalb eines vorbestimmten zweiten Geschwindigkeitsbereichs festgelegt wird, wobei die Ausweichgrenzzeit ein Grenzwert einer Zeit ist, innerhalb derer das Ziel (Vt) imstande ist, dem Kontakt mit dem Host-Fahrzeug (V) oder dessen unmittelbarer Nähe auszuweichen.

5. Absetzhilfevorrichtung nach einem der Ansprüche 1 bis 4, wobei die elektronische Steuereinheit (10) ausgestaltet ist zum, wenn die elektronische Steuereinheit bestimmt, dass der Insasse vorhat, sich absetzen zu lassen, und während das Host-Fahrzeug (V) stillsteht,
Berechnen der vorhergesagten Zeit und
Ausführen der Absetzhilfesteuerung, wenn die vorhergesagte Zeit gleich oder kleiner als der vorbestimmte Zeitschwellenwert ist.

6. Absetzhilfevorrichtung nach einem der Ansprüche 1 bis 5, wobei die Absetzhilfesteuerung darin besteht, die elektronische Steuereinheit (10) so zu steuern, dass sie einen Alarm auslöst.

7. Absetzhilfevorrichtung nach einem der Ansprüche 1 bis 5, wobei die Absetzhilfesteuerung darin besteht, die elektronische Steuereinheit (10) so zu steuern, dass sie einen Grad einer Türöffnung begrenzt.

8. Absetzhilfevorrichtung nach einem der Ansprüche 1 bis 5, wobei die Absetzhilfesteuerung darin besteht, die elektronische Steuereinheit (10) so zu steuern, dass sie eine Tür verriegelt.

9. Absetzhilfevorrichtung nach einem der Ansprüche 1 bis 8, wobei die elektronische Steuereinheit (10) dazu ausgestaltet ist, die Absetzhilfesteuerung auszuführen, wenn die vorhergesagte Zeit für einen vorbestimmten Zeitraum durchgängig gleich oder kleiner als der vorbestimmte Zeitschwellenwert ist.

10. Absetzhilfeverfahren, umfassend:
Erkennen eines Ziels (Vt), das in einem Bereich hinter einem Host-Fahrzeug (V) vorhanden ist,
Erfassen von Informationen über das erkannte Ziel (Vt) als Zielinformationen, und
während das Host-Fahrzeug (V) stillsteht,
i) Berechnen, auf Grundlage der Zielinformationen, einer vorhergesagten Zeit, die erforderlich ist, damit das Ziel (Vt) in Kontakt mit dem Host-Fahrzeug (V) kommt oder in dessen unmittelbare Nähe gelangt,
ii) Festlegen eines vorbestimmten Zeitschwellenwerts auf einen vorbestimmten ersten Zeitschwellenwert, wenn eine Geschwindigkeit des erkannten Ziels (Vt) gleich oder niedriger als eine vorbestimmte erste Geschwindigkeit ist,
iii) Festlegen des vorbestimmten Zeitschwellenwerts auf einen Wert, der kleiner als der vorbestimmte erste Zeitschwellenwert ist, wenn die Geschwindigkeit des erkannten Ziels (Vt) höher als die vorbestimmte erste Geschwindigkeit ist, und
iv) Ausführen einer Absetzhilfesteuerung zum Helfen beim Absetzen eines Insassen des Host-Fahrzeugs (V), wenn die vorhergesagte Zeit gleich oder kleiner als der vorbestimmte Zeitschwellenwert ist.

11. Nichtflüchtiges Speichermedium, auf dem Anweisungen gespeichert sind, die durch einen oder mehrere Prozessoren ausführbar sind und die den einen oder die mehreren Prozessoren dazu veranlassen, Funktionen durchzuführen, umfassend:
Erkennen eines Ziels (Vt), das in einem Bereich hinter einem Host-Fahrzeug (V) vorhanden ist,
Erfassen von Informationen über das erkannte Ziel (Vt) als Zielinformationen, und
während das Host-Fahrzeug (V) stillsteht,
i) Berechnen, auf Grundlage der Zielinformationen, einer vorhergesagten Zeit, die erforderlich ist, damit das Ziel (Vt) in Kontakt mit dem Host-Fahrzeug (V) kommt oder in dessen unmittelbare Nähe gelangt,
ii) Festlegen eines vorbestimmten Zeitschwellenwerts auf einen vorbestimmten ersten Zeitschwellenwert, wenn eine Geschwindigkeit des erkannten Ziels (Vt) gleich oder niedriger als eine vorbestimmte erste Geschwindigkeit ist,
iii) Festlegen des vorbestimmten Zeitschwellenwerts auf einen Wert, der kleiner als der vorbestimmte erste Zeitschwellenwert ist, wenn die Geschwindigkeit des erkannten Ziels (Vt) höher als die vorbestimmte erste Geschwindigkeit ist, und
iv) Ausführen einer Absetzhilfesteuerung zum Helfen beim Absetzen eines Insassen des Host-Fahrzeugs (V), wenn die vorhergesagte Zeit gleich oder kleiner als der vorbestimmte Zeitschwellenwert ist.

## Revendications

1. Dispositif d'aide à la descente comprenant :
un capteur d'acquisition d'information de cible (12) configuré pour
détecter une cible (Vt) présente dans une zone vers l'arrière d'un véhicule hôte (V), et
acquérir de l'information sur la cible détectée (Vt) comme information de cible ; et
une unité de commande électronique (10) configurée pour,
alors que le véhicule hôte (V) est arrêté,
calculer, sur la base de l'information de cible, un temps prévu requis pour que la cible (Vt) vienne en contact avec ou arrive à proximité immédiate du véhicule hôte (V), et
exécuter la commande d'aide à la descente pour aider la descente d'un occupant du véhicule hôte (V) quand le temps prévu est égal ou inférieur à un seuil de temps prédéterminé,
**caractérisé en ce que** l'unité de commande électronique (10) est en outre configurée pour
établir le seuil de temps prédéterminé à un premier seuil de temps prédéterminé quand une vitesse de la cible détectée (Vt) est égale ou inférieure à une première vitesse prédéterminée, et
établir le seuil de temps prédéterminé à une valeur plus petite que le premier seuil de temps prédéterminé quand la vitesse de la cible détectée (Vt) est plus élevée que la première vitesse prédéterminée.

2. Dispositif d'aide à la descente selon la revendication 1, dans lequel :
la première vitesse prédéterminée est établie sur la base d'une distribution de vitesse d'une bicyclette se déplaçant sur une route ; et
le premier seuil de temps prédéterminé est établi sur la base d'un temps de limite d'évitement de la bicyclette à une vitesse dans une première plage de vitesse prédéterminée, le temps de limite d'évitement étant une valeur limite d'un temps pendant lequel la cible (Vt) est capable d'éviter le contact ou la proximité immédiate avec le véhicule hôte (V).

3. Dispositif d'aide à la descente selon la revendication 1 ou 2, dans lequel l'unité de commande électronique (10) est configurée pour établir le seuil de temps prédéterminé à un deuxième seuil de temps prédéterminé plus petit que le premier seuil de temps prédéterminé quand la vitesse de la cible détectée (Vt) est plus élevée qu'une deuxième vitesse prédéterminée plus élevée que la première vitesse prédéterminée.

4. Dispositif d'aide à la descente selon la revendication 3, dans lequel :
la deuxième vitesse prédéterminée est établie sur la base d'une distribution de vitesse de la cible (Vt) autre qu'une bicyclette se déplaçant sur une route ; et
le deuxième seuil de temps prédéterminé est établi sur la base d'un temps de limite d'évitement de la cible (Vt) autre que la bicyclette à une vitesse dans une deuxième plage de vitesse prédéterminée, le temps de limite d'évitement étant une valeur limite d'un temps pendant lequel la cible (Vt) est capable d'éviter le contact ou la proximité immédiate avec le véhicule hôte (V).

5. Dispositif d'aide à la descente selon l'une quelconque des revendications 1 à 4, dans lequel l'unité de commande électronique (10) est configurée pour, quand l'unité de commande électronique détermine que l'occupant a l'intention de descendre et alors que le véhicule hôte (V) est arrêté,
calculer le temps prévu, et
exécuter la commande d'aide à la descente quand le temps prévu est égal ou inférieur au seuil de temps prédéterminé.

6. Dispositif d'aide à la descente selon l'une quelconque des revendications 1 à 5, dans lequel la commande d'aide à la descente est une commande de l'unité de commande électronique (10) pour générer une alerte.

7. Dispositif d'aide à la descente selon l'une quelconque des revendications 1 à 5, dans lequel la commande d'aide à la descente est une commande de l'unité de commande électronique (10) pour limiter un degré d'ouverture de porte.

8. Dispositif d'aide à la descente selon l'une quelconque des revendications 1 à 5, dans lequel la commande d'aide à la descente est une commande de l'unité de commande électronique (10) pour bloquer une porte.

9. Dispositif d'aide à la descente selon l'une quelconque des revendications 1 à 8, dans lequel l'unité de commande électronique (10) est configurée pour exécuter la commande d'aide à la descente quand le temps prévu est égal ou inférieur au seuil de temps prédéterminé de manière continue pendant une période prédéterminée.

10. Procédé d'aide à la descente comprenant le fait de :
détecter une cible (Vt) présente dans une zone vers l'arrière d'un véhicule hôte (V) ;
acquérir de l'information sur la cible détectée (Vt) comme information de cible ; et
alors que le véhicule hôte (V) est arrêté,
i) calculer, sur la base de l'information de cible, un temps prévu requis pour que la cible (Vt) vienne en contact avec ou arrive à proximité immédiate du véhicule hôte (V) ;
ii) établir un seuil de temps prédéterminé à un premier seuil de temps prédéterminé quand une vitesse de la cible détectée (Vt) est égale ou inférieure à une première vitesse prédéterminée ;
iii) établir le seuil de temps prédéterminé à une valeur plus petite que le premier seuil de temps prédéterminé quand la vitesse de la cible détectée (Vt) est plus élevée que la première vitesse prédéterminée ; et
iv) exécuter une commande d'aide à la descente pour aider la descente d'un occupant du véhicule hôte (V) quand le temps prévu est égal ou inférieur au seuil de temps prédéterminé.

11. Support de stockage non-transitoire stockant des instructions qui sont exécutables par un ou plusieurs processeurs et qui amènent les un ou plusieurs processeurs à remplir des fonctions comprenant le fait de :
détecter une cible (Vt) présente dans une zone vers l'arrière d'un véhicule hôte (V) ;
acquérir de l'information sur la cible détectée (Vt) comme information de cible ; et
alors que le véhicule hôte (V) est arrêté,
i) calculer, sur la base de l'information de cible, un temps prévu requis pour que la cible (Vt) vienne en contact avec ou arrive à proximité immédiate du véhicule hôte (V) ;
ii) établir un seuil de temps prédéterminé à un premier seuil de temps prédéterminé quand une vitesse de la cible détectée (Vt) est égale ou inférieure à une première vitesse prédéterminée ;
iii) établir le seuil de temps prédéterminé à une valeur plus petite que le premier seuil de temps prédéterminé quand la vitesse de la cible détectée (Vt) est plus élevée que la première vitesse prédéterminée ; et
iv) exécuter la commande d'aide à la descente pour aider la descente d'un occupant du véhicule hôte (V) quand le temps prévu est égal ou inférieur au seuil de temps prédéterminé.
